# EUROPÄISCHE PATENTSCHRIFT

(11) **EP 0 716 247 B1**
(45) Veröffentlichungstag und Bekanntmachung des Hinweises auf die Patenterteilung: **16.04.1997**
(21) Anmeldenummer: 95203320.7
(22) Anmeldetag: 01.12.1995
(51) Int. Cl.: F16D 69/02, F16D 23/04

(54) **Synchronring mit Reibfläche aus Sinterbronze**
Synchronizing ring with sinter-bronze friction surface
Anneau de synchronisation à surface de frottement en bronze fritté

(30) Priorität: 08.12.1994 DE 4443666
(43) Veröffentlichungstag der Anmeldung: 12.06.1996
(73) Patentinhaber: SINTERSTAHL Gesellschaft m.b.H., D-87629 Füssen (DE)
(72) Erfinder:
(74) Vertreter: Lohnert, Wolfgang, Dr.

(56) Entgegenhaltungen:
- EP-A- 0 505 345
- DE-A- 3 723 999
- GB-A- 2 135 411
- DATABASE WPI Derwent Publications Ltd., London, GB; AN 95-128629 & JP-A-07 053 947 (TOKAI CARBON) , 28.Februar 1995
- DATABASE WPI Derwent Publications Ltd., London, GB; AN 93-261897 & JP-A-05 179 232 (TOSHIBA TUNGALLOY) , 20.Juli 1993
- DATABASE WPI Derwent Publications Ltd., London, GB; AN 83785883 & JP-A-58 147 481 (MIYAUCHI) , 2.September 1983

## Beschreibung

Die Erfindung betrifft ein Bauteil für Synchronisiereinrichtungen mit Reibflächen aus einer Bronzelegierung, beispielsweise einen Synchronring, wie er insbesondere unter hoher Reibbelastung in Schaltgetrieben für Kraftfahrzeuge eingesetzt wird.

Es sind Ausgestaltungen von Synchronringen aus einem einheitlichen Werkstoff bekannt, bei denen dieser sowohl die mechanischen Festigkeitseigenschaften als auch die beim Reibschluß zwischen den Oberflächen von Synchronring und Gegenkonus geforderten Reibeigenschaften mitbringen muß. Es ist daneben bekannt, Synchronringe in einer Art Sandwich-Bauweise zu fertigen, wobei diesen ein Grundkörper aus dem Werkstoff A die mechanischen Festigkeitseigenschaften und ein auf diesen aufgebrachter Reibring aus dem Werkstoff B die vorteilhaften Reibeigenschaften verleiht. Für beide Ausführungen von Synchronringen ist seit langem die Verwendung von Messing- und Bronzewerkstoffen bekannt, siehe dazu z.B. DE-AS 16 30 912, GB-PS 530 904.

Übliche Bronzelegierungen sind deutlich weicher als Messinglegierungen. Weiche metallische Werkstoffe wie Bronze neigen im Reibschluß mit Reibflächen aus Stahl zu großem Verschleiß, d.h. zu geringer Lebensdauer. Es ist technisch erklärbar, daß schmelzmetallurgisch gefertigte Synchronringe aus verschiedenen Messinglegierungen als preisgünstiges Standardbauteil gelten und bis heute in PKW-Getrieben überwiegend Verwendung finden.
Der Begriff "Bronze-Werkstoff" an sich läßt bezüglich Materialzusammensetzung, Materialstruktur und -dichte weite Ausgestaltungsbereiche offen. Die nachfolgenden Ausführungen am Beispiel Reibwerkstoffe auf Eisenbasis zeigen, daß sich über die Änderung jeder der obigen Werkstoff-Kenngrößen sehr unterschiedliche Klassen von Reibwerkstoffen mit sehr unterschiedlichen Eigenschaften fertigen lassen und kommerziell verwertet werden.

Die DE-OS 27 18 495 nennt in ihrem Hauptanspruch für die im Reibschluß miteinander kuppelnden Teile einer Synchronisiereinrichtung die Verwendung von Werkstoffen hoher Wärmeleitfähigkeit, wie aushärtbare, niedrig legierte Kupferlegierung, ohne jedoch die Zusammensetzung der brauchbaren Legierungen, z.B. Messinglegierungen, näher zu beschreiben.

Auch die DE-OS 29 28 853 beschreibt in ihrem einleitenden Teil zum Stand der Technik die Herstellung von Synchronringen aus einem abriebbeständigen bzw. verschleißfesten Metall, wie z.B. Messing oder Bronze als Gußteile, wodurch derartige Synchronringe "im allgemeinen sehr teuer sind".
Als erfinderische Weiterentwicklung wird dort eine Sandwich-Bauweise beschrieben, nach der der ringförmige Haupt- bzw. Basiskörper aus einem Kunststoff besteht, auf den ein Ringkörper aus verschleißfestem Metall mit einer konischen Gleitfläche aufgebracht ist. Der Reibkörper kann entsprechend der Ausführungen aus Messing oder Bronze bestehen.

Die Reibeigenschaften von Reibwerkstoffen für Synchronringe lassen sich, vor allem auch in Anpassung auf den Gegenkonus, z.B. aus Stahl, durch sehr unterschiedliche metallische und nichtmetallische Zugaben zu einer metallischen Grundmatrix wesentlich beeinflussen.
Entsprechend der US-PS 22 14 104 ist der Reibbelag ein poröses, gesintertes Metallelement, das aus 78 Teilen Eisen, 20 % Blei und 2 Anteilen an Graphit besteht.

Bei sintermetallischen Reibwerkstoffen mit nichtmetallischen Zusätzen mangelt es bis heute regelmäßig an der ausreichenden Pulververdichtung, d.h. es treten Schwierigkeiten bei der Herstellung eines Reibmaterials solcher Festigkeit auf, die den beim Reibeingriff zwischen Synchronring und Gegenkonus auftretenden hohen Pressdrücken und Temperaturbelastungen ausreichend standhält.

Die Literatur bietet zwar die Auswahl aus einer Vielzahl von speziellen Herstellungsverfahren zur Verarbeitung sehr unterschiedlicher metallischer und nicht metallischer Werkstoffe an. Doch aufwendige pulvermetallurgische Herstellverfahren verteuern einen derart gefertigten Synchronring in einem für derartige Massenteile untragbaren Ausmaß und erlauben zudem nur einen unbefriedigenden Kompromiß von sich in der Regel ausschließender hoher mechanischer Festigkeit und guten Reibeigenschaften. Für erstere muß absolute Porenfreiheit, für letztere muß nach Ansicht des Fachmannes eine grobkörnig poröse Werkstoffstruktur angestrebt werden.

Einen Qualitätssprung bedeutete bei Bauteilen für Synchronisiereinrichtungen in hochbelasteten Kraftfahrzeuggetrieben die Einführung von Streusinterreibbelägen. Bei Streusinterreibbelägen werden die Reibwerkstoffe auf ein Trägerblech aufgebracht. Die Herstellungskosten für derartige Synchroneinrichtungen mit Reibbelag sind jedoch so hoch, daß sie bis heute überwiegend im Segment höchster Belastungsanforderungen eingesetzt werden. Bei Standardgetrieben im PKW werden nach wie vor schmelzmetallurgisch gefertigte Vollmessingringe als Synchronringe verwendet.

Es ist daher die Aufgabe vorliegender Erfindung, ein im Vergleich zu bekannten Ausführungen besonders preisgünstiges Sinterbauteil für Synchroneinrichtungen bereitzustellen, das zumindest im Bereich seiner Reibflächen aus einem Werkstoff besteht, welcher in seinen Festigkeits-, Reib- und Verschleißeigenschaften den diesbezüglich bisher im Spitzenfeld liegenden, bekannten, aber vergleichweise teuren, oder nach aufwendigen Verfahren herstellbaren Werkstoffen qualitativ nicht nachsteht. Die Aufgabe umfaßt weiterhin die Bereitstellung von zu dessen Herstellung geeigneter Verfahren sowie Angaben zu dessen vorteilhafter Verwendung. Die Aufgabe wird für ölgeschmierte Bauteile für Einrichtungen zur Reibsynchronisation in Kfz-Schaltgetrieben, insbesondere für Synchronringe, erfindungsgemäß gelöst mit der Bereitstellung eines geeigneten, zumindest im Bereich seiner Reiboberfläche weitgehend porenfreien Sinter-Verbundwerkstoffes folgender Zusammensetzung:
1 - 6 Gew.% Silizium- und/oder Aluminiumoxid,
wahlweise 0,2 - 6 Gew.% Graphit und/oder Molybdändisulfid,
bis zu 6 Gew.% Zink,
bis zu 6 Gew.% Nickel,
bis zu 3 Gew.% Molybdän,
Rest Bronze von 70 - 98 Gew.-Anteil Kupfer und
2 - 30 Gew.-Anteil Zinn,
wobei die Teilchengrößen der zur Fertigung der Bronzelegierung verwendeten Ausgangspulver für die Metallkomponenten zwischen 5 und 60 µm, für Silizium- und/oder Aluminiumoxid zumindest mehrheitlich bei < 40 µm, und für Graphit und/oder Molybdändisulfid zumindest zur Hälfte bei < 5 µm liegen.

Die Patentunteransprüche beschreiben bevorzugte Ausführungen der Erfindung.

Der erfindungsgemäße Sinterbronze-Verbundwerkstoff enthält neben den für das Reib- und Verschleißverhalten unverzichtbaren Komponenten eine Reihe von weiteren alternativen Zusatzwerkstoffen. Diese beeinflussen zum einen vornehmlich die mechanischen Festigkeitseigenschaften und zum anderen die Gleiteigenschaften des Reibwerkstoffes. Die Zusatzwerkstoffe sind in ihrer Wirksamkeit als Werkstoffgruppe zu sehen, die in Summe in ihren Gewichts-Anteilen üblicherweise weit unter den Grenzanteilen des einzelnen Zusatzwerkstoffes bleiben.

Der erfindungsgemäße Bronze-Sinter-Verbundwerkstoff wird nach bekannten sintermetallurgischen Verfahren hergestellt. Im Unterschied zu bekannten Verbundwerkstoffen mit guter Reibcharakteristik läßt er sich mittels preiswerter Standardverfahren über das Pulverpressen zu Bauteilen, insbesondere auch zu kompletten mehrmaterialigen Verbund-Bauteilen hoher mechanischer Festigkeit versintern. Soweit Verfahrensoptimierungen erforderlich sind, liegen diese im Bereich des Könnens eines Durchschnittsfachmannes. Vermehrte Aufmerksamkeit verlangt die homogene Einbringung einzelner Materialkomponenten in die Pulvermischung. So läßt sich beispielsweise der wahlweise verwendete Zinkanteil in der wünschenswerten Homogenität und Menge nur über eine pulverförmige Messing-Vorlegierung einbringen.

Die erfindungswesentliche, weitgehend porenfreie Oberflächenzone des übliche Sinterporosität aufweisenden Bronzereibwerkstoffs wird am fertig gesinterten und ggf. fertig gefügten Sinterbauteil mittels Überdrehen oder Überschleifen der Reibfläche erzeugt. Dabei werden mit der Materialabtragung zugleich die nach dem Sintern verbliebenen Poren zugeschmiert.

Nach einer bevorzugten Ausführung der Erfindung wird die so geschaffene Reiboberfläche anschließend mittels Hochdruck-Partikelstrahlens innerhalb einer Oberflächenzone geringer Tiefe nachverdichtet und nachverfestigt, sowie oberflächlich gleichmäßig aufgerauht.

Bezogen auf seine bestimmungsgemäße Verwendung liegt der Vorteil des erfindungsgemäßen Verbund-Reibwerkstoffes und das aus ihm gefertigte Bauteil in einer für den Fachmann nicht vorhersehbaren Vielzahl nebeneinander vorliegender, günstiger Kenndaten und Eigenschaften; das sind
- das vergleichsweise problemlose und daher kostengünstige Versintern metallischer und nicht metallischer Materialkomponenten zu vergleichsweise dichten Bauteilen
- die wegen vergleichsweise hoher spezifischer Sinterdichte hohe mechanische Festigkeit und
- die trotz hoher Sinterdichte hervorragende Reibcharakteristik.

Neben den guten Verschleißeigenschaften auch bei für derartige Bauteile hohen Belastungen und hohen Flächenpressungen auf die Reibfläche, ist es vor allem die günstige Reibungszahl des erfindungsgemäßen Verbundwerkstoffes, von der der Fachmann bisher glaubte, diese nur mittels hochporöser Sinterrreibwerkstoffe erzielen zu können und die bisher tatsächlich auch nur mittels poröser Werkstoffe erreicht wurden.
Dieser Vorteil ist besonders bedeutsam, weil er in der Reibpaarung mit bewährten, üblicherweise in Synchronisationseinrichtungen für Getriebe verwendeten glatten und porenfreien Gegenkoni aus Stahl erzielt wird. Besonders günstige Werte bezüglich Reibcharakteristik lassen sich im Vergleich zu Ausführungen nach dem bekannten Stand der Technik erzielen, wenn der erfindungsgemäße Reibverbundwerkstoff in einer Reibpaarung mit Stahl hoher Oberflächenporosität verwendet wird.

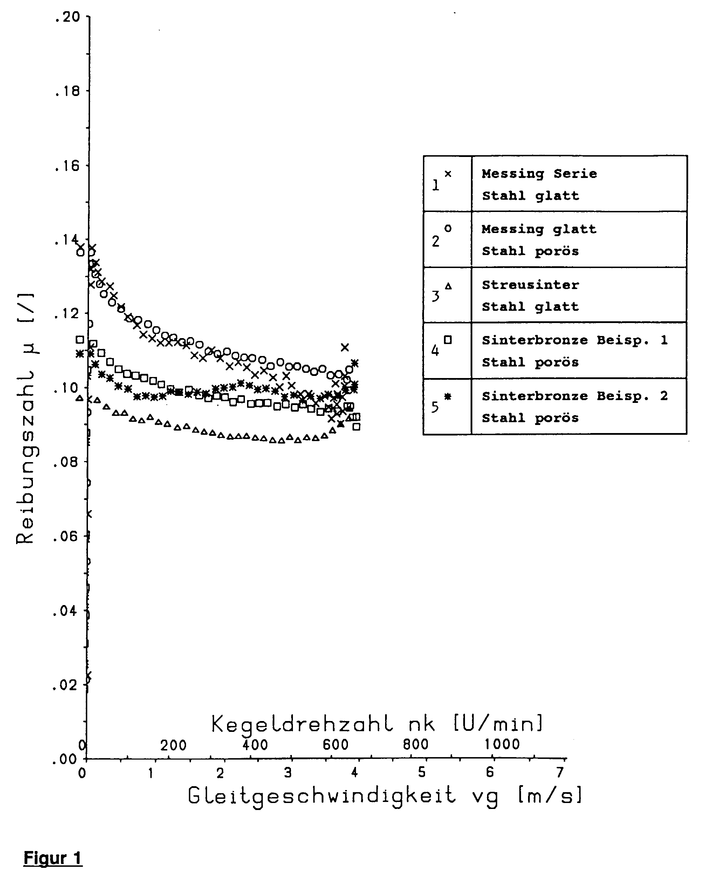

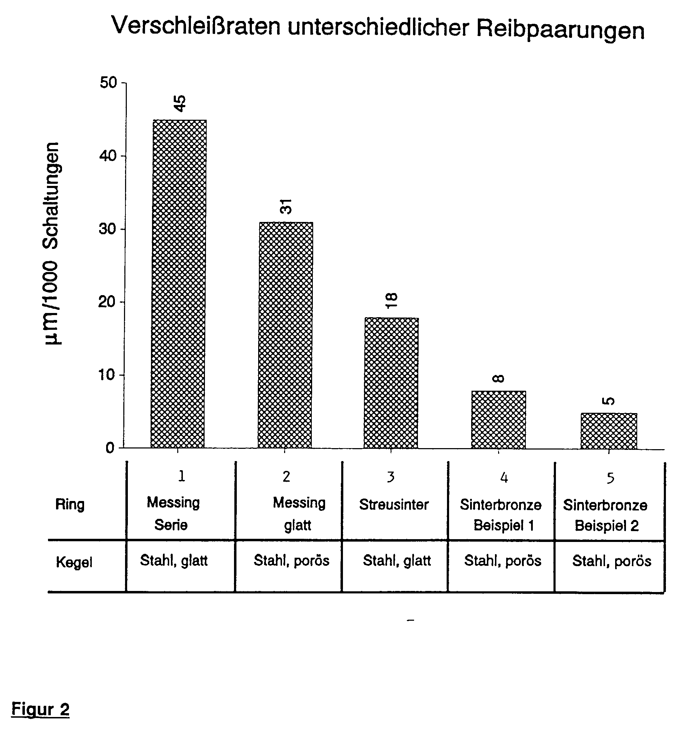

Die nachfolgenden Beispiele beschreiben bevorzugte Ausgestaltungen des erfindungsgemäßen Bauteils.
Dort werden anhand der Figuren 1 und 2 weiterhin die Reib- und Verschleißeigenschaften der Verbundwerkstoffe gemäß Beispiel mit Werkstoff-Gleitpaarungen bekannter Synchronisationseinrichtungen verglichen.

### Beispiel 1

In einer bevorzugten Ausgestaltung des Erfindungsgegenstandes wird in den Grundkörper eines mit Reibflächen versehenen Synchronringes aus Sinterstahl ein ringförmiges Reibelement gemäß Erfindung eingepreßt oder alternativ direkt eingesintert.
Dazu werden 96 Gew.% vorlegiertes Bronzepulver (90 Teile Kupfer - 10 Teile Zinn) mit 3 Gew.% Quarzmehl und 1 Gew.% Graphit zu einer homogenen Pulvermischung verarbeitet. Das Bronzepulver hat eine Korngröße < 53 µm, wobei die Kornform unregelmäßig ist. Das Quarzmehl, SiO₂, weist eine Korngröße von im wesentlichen < 40 µm auf, d.h. 95 % des Quarzmehles besitzen eine Korngröße < 40 µm.
Das Graphitpulver (Lieferant Fa. Kropfmühle, VF 2) hat eine mittlere Korngröße von 2 µm.

Die so erhaltene Pulvermischung wird anschließend wahlweise in einer eigenen Vorform zu einem ringförmigen Grünling verpreßt, gesintert und der Sinterring in den Grundkörper eingepreßt, oder das Pulver wird alternativ in Anwendung einer entsprechenden Adapterform direkt zwischen die Reiboberfläche des Synchrongrundringes und die Adapterform eingebracht, durch Einstampfen auf eine Klopfdichte von ρ = 4,0 g/cm³ verdichtet und schließlich bei 760° bis 850°C während 1/2 Stunde Sinterzeit direkt auf den Synchronring-Grundkörper aufgesintert. Nach dem Sintern hat der Reibwerkstoff eine Dichte von ca. 6 g/cm³.
Das gesinterte Verbund-Bauteil wird nachfolgend plasmanitriert und im Bereich der aktiven Reibfläche überdreht, d.h. mechanisch bearbeitet und innerhalb üblicher Toleranzen vom Sinter-Aufmaß auf Sollabmessung gebracht. Bei dieser Bearbeitung wird durch eine Art Werkstoff-Verschmieren eine, soweit über diesen Prozeß machbar, weitgehend porenfreie Oberflächenzone geschaffen.

Der Synchronring in Verbund-Bauweise weist eine die Reibfläche bildende ringförmige Zone hoher mechanischer Festigkeit und Dichte auf.

Das so gefertigte Bauteil wird in einem Prüfstand unter praxisnahen Bedingungen hinsichtlich seiner Reibeigenschaften untersucht und mit bekannten, im Kfz-Getriebebau regelmäßig verwendeten Bauteilen aus Werkstoffen bekannter Reibpaarungen verglichen.

Höchstbeanspruchte Synchroneinrichtungen in Getrieben laufen ölgeschmiert. Entsprechend wurden die Reibtests am ölgeschmierten Bauteil in Verwendung handelsüblicher EP- und ATF-Getriebeöle durchgeführt.
Das Reibverhalten eines Werkstoffes, bzw. einer daraus gefertigten Reibfläche in einer Reibpaarung wird vom Werkstoff der Gegenreibfläche entscheidend mitbestimmt. Üblicherweise besteht im Kfz-Getriebe eine Reibfläche eines Reibpaares aus porenfreiem Stahl, z.B. 16 Mn Cr 5. Alternativ werden heute für die Gegenreibfläche Stahlsorten mit poröser Oberflächenstruktur vorgeschlagen.
In den nachfolgend beschriebenen Tests kommen beide Werkstoff-Gruppen zum Einsatz.

Zwei wesentliche Kenngrößen zur Qualifizierung eines Reibwerkstoffes in einer bestimmten Reibpaarung sind seine Verschleißrate und sein durch die Reibungszahl µ als Funktion der Reib- bzw. Gleitgeschwindigkeit gekennzeichnetes Reibverhalten.
Diese Kenngrößen hängen wiederum maßgebend von der Belastung der jeweiligen Reibflächen ab, wobei die Belastung von Reibflächen üblicherweise durch die Flächenpressung p (N/mm²) der Reibfläche und durch die spezifische Reibarbeit q (J/mm²) gekennzeichnet sind. Typische bis hohe Belastungswerte für Synchronisiereinrichtungen in Kfz-Getrieben sind
p = 3 - 4,5 N/mm²,
q = 0,3 - 0,45 J/mm².

Die Testergebnisse für das Bauteil gemäß vorliegender Erfindung werden in Figuren 1 und 2 zusammengefaßt und mit Ausführungen gemäß dem bekannten Stand der Technik verglichen. Das sind zum einen in der Praxis verwendete Synchronringe aus Messing in der Reibpaarung sowohl mit einem porösen, als auch mit einem nicht porösen Stahlgegenkonus, und zum anderen Synchronringe mit einer Streusinterreibbelagauflage im Bereich der Reibflächen in der Reibpaarung mit nicht porösen Flächen eines Stahlkonus.

Figur 1 zeigt den Verlauf der Reibungszahl für die genannten Reibwerkstoff-Paarungen in Abhängigkeit von der Gleitgeschwindigkeit.
Die Kurve 4 dieser Figur gibt das Reibungsverhalten des Reibwerkstoffes nach diesem Beispiel in einer Reibpaarung mit einem porösen Stahlkegel wieder.
Die Reibcharakteristik (Probe 4), die dem Fachmann zum "Schaltkomfort" Auskunft gibt, übertrifft die der Vergleichspaarungen nach dem Stand der Technik wesentlich. Im Gegensatz zum Stand der Technik (Proben 1 und 2) ist bei Probe 1 die Haftreibung (v_{g} = 0) nur geringfügig höher als die Gleitreibung (v_{g} = 3 m/s). Gegenüber Streusinterreibbelägen (Probe 3) ist das bei entsprechender Reibcharakteristik konstant höhere Reibungszahlniveau der Reibpaarung gemäß Probe 4 von Vorteil, da es kürzere Schaltzeiten im Fahrzeug erlaubt.

Figur 2 zeigt Verschleißraten (Probe 4), im Vergleich mit Reibpaarungen nach dem Stand der Technik (Proben 1 bis 3), dargestellt als Oberflächen-Schichtdickenabtragung in Mikrometer Verschleiß pro 1.000 Schaltungen. Die Lebensdauer von Bauteilen gemäß Erfindung übertrifft unter praxisnahen, anspruchsvollen Versuchsbedingungen demzufolge Reibpaarungen nach dem Stand der Technik um ein Mehrfaches.

### Beispiel 2

Beispiel 2 unterscheidet sich von Beispiel 1 in der Materialzusammensetzung des Reibwerkstoffes.

Es werden die folgenden Pulverkomponenten vermischt
- 67 Gew.% vorlegiertes Bronzepulver (90 Kupfer - 10 Zinn) der Qualität von Beispiel 1
- 30 Gew.% vorlegiertes Messingpulver (80 % Kupfer - 20 % Zink) einer Korngröße (26 % > 40 µm, Rest < 40 µm)
- 3 Gew.% Quarzmehl der Qualität gemäß Beispiel 1.

Der obengenannte Messinganteil in der Pulvermischung entspricht einem Zinkanteil von ca. 6 Gew.%. Der Zinkzusatz wird dem Bronzepulver jedoch nicht in metallischer Form zugegeben, da andernfalls das Zink in der fertigen Legierung nicht in der gewünschten Homogenität vorliegt.

Wie in Beispiel 1 wird das vermischte Pulver nach Anlegen einer entsprechenden Preßform an den Synchronring-Grundkörper in einen Ringbereich eingeschüttet und mittels Heißpressen bei zu denen des Beispiels 1 vergleichbaren Sinterzeiten und Sintertemperaturen auf dem Grundkörper aufgesintert.

Der Ringwerkstoff nach diesem Beispiel zeigt ebenfalls hohe Festigkeit und Dichte.
Die Reibcharakteristik ist als Kurve 5 in Figur 1 dargestellt. Das gegenüber Beispiel 1 nochmals verbesserte Verschleißverhalten eines Bauteiles in dieser bevorzugten Werkstoffausführung ist unter der Kennzahl 5 in Figur 2 dargestellt.

## Patentansprüche

1. Bauteil für ölgeschmierte Einrichtungen zur Reibsynchronisation in Schaltgetrieben von Kraftfahrzeugen, wie Synchronring, mit Reibflächen aus einer Bronzelegierung,
**dadurch gekennzeichnet**,
daß die Bronzelegierung ein, übliche Sinterporosität aufweisender, jedoch im Bereich seiner Reiboberfläche weitgehend porenfreier Sinter-Verbundwerkstoff folgender Zusammensetzung ist:
1 - 6 Gew.% Silizium- und/oder Aluminiumoxid,
wahlweise 0,2 - 6 Gew.% Graphit und/oder Molybdändisulfid,
bis zu 6 Gew.% Zink,
bis zu 6 Gew.% Nickel,
bis zu 3 Gew.% Molybdän,
Rest Bronze von 70 - 98 Gew.-Anteil Kupfer und 2 - 30 Gew.-Anteil Zinn,
und wobei die Teilchengrößen der zur Fertigung der Bronzelegierung verwendeten Ausgangspulver für die Metallkomponenten zwischen 5 und 60 µm,
für Silizium- und/oder Aluminiumoxid zumindest zur Hälfte bei < 40 µm,
und für Graphit und/oder Molybdändisulfid zumindest zur Hälfte bei < 5 µm liegen.

2. Bauteil nach Anspruch 1, dadurch gekennzeichnet, daß der Verbundwerkstoff SiO₂, bzw. Quarz in einem Anteil von 2,0 - 4,0 Gew.% enthält.

3. Bauteil nach Anspruch 1, dadurch gekennzeichnet, daß der Verbundwerkstoff Al₂O₃ in einem Anteil von 0,4 - 1 Gew.% enthält.

4. Bauteil nach Anspruch 1 bis 3, dadurch gekennzeichnet, daß der Anteil an Graphit im Verbundwerkstoff 0,5 - 1,5 Gew.% beträgt.

5. Bauteil nach Anspruch 1 bis 4, dadurch gekennzeichnet, daß der Verbundwerkstoff aus 84 Gew.% Cu, 13 Gew.% Sn, 2 Gew.% SiO₂ und 1 Gew.% Graphit besteht.

6. Bauteil nach Anspruch 1 bis 5, dadurch gekennzeichnet, daß der Verbundwerkstoff aus 84 Gew.% Cu, 5 Gew.% Sn, 6 Gew.% Zn, 4 Gew.% SiO₂ und 1 Gew.% SiO₂ besteht.

7. Bauteil nach Anspruch 1 bis 6, dadurch gekennzeichnet, daß dieses ein selbsttragender Synchronring mit Sperrverzahnung und Anschlägen ist.

8. Bauteil nach Anspruch 1 bis 6, dadurch gekennzeichnet, daß dieses einen Reibkörper aufweist, der auf einen Grundkörper aufgepreßt, aufgeschweißt oder aufgesintert ist.

9. Verfahren zur Herstellung eines Bauteiles für Synchronisiereinrichtungen nach Anspruch 1 bis 8, dadurch gekennzeichnet, daß Ausgangspulver folgender Teilchengrößen verwendet werden,
Silizium- und/oder Aluminiumoxid-Pulver:
65 - 100 Gew.-Anteil der Teilchengröße < 40 µm und
0 - 35 Gew.-Anteil 40 - 100 µm,
Graphit und/oder Molybdändisulfid-Pulver:
50 - 100 Gew.-Anteil < 5 µm und 0 - 50 Gew.-Anteil 5 - 160 µm.

10. Verfahren zur Herstellung eines Bauteiles für Synchronisiereinrichtungen nach Anspruch 1 bis 9, dadurch gekennzeichnet, daß das fertig gesinterte Bauteil anschließend im Bereich der Reibfläche mittels Hochdruck-Partikelstrahlens mit Partikeln von 400 - 500 µm Teilchengröße bei einem Stahldruck > 5 bar oberflächlich nachverdichtet und kaltverfestigt wird.

11. Verfahren zur Herstellung eines Bauteiles für Synchronisiereinrichtungen nach Anspruch 1 bis 10, dadurch gekennzeichnet, daß der metallische Werkstoffanteil Zink in Form von Messingpulver < 150 µm Teilchengröße in die Werkstoff-Ausgangsmischung eingebracht wird.

12. Verwendung eines Bauteils für Synchronisiereinrichtungen nach Anspruch 1 bis 8 in der Reibpaarung mit einem Bauteil hoher Oberflächenporosität aus Stahl.

## Claims

1. A component for oil-lubricated devices for friction synchronisation in gear-shift mechanisms of motor vehicles, such as synchronising rings, with friction surfaces made of a bronze alloy, characterised in that the bronze alloy is a sinter compound material which has a conventional sinter porosity but is extensively non-porous in the region of its friction surface and has the following composition:
1 - 6% by weight silicon dioxide and/or aluminium oxide,
optionally 0.2 - 6% by weight graphite and/or molybdenum sulphide,
up to 6% by weight zinc,
up to 6% by weight nickel,
up to 3% by weight molybdenum,
the rest being bronze comprising 70 - 98 parts copper and 2 - 30 parts tin,
the particle size of the starting powder used for manufacturing the bronze alloy lying between 5 and 60 µm for the metal components, being at least for the most part < 40 µm for silicon dioxide and/or aluminium oxide, and < 5 µm for at least half the graphite and/or molybdenum sulphide.

2. A component according to claim 1, characterised in that the compound material contains SiO₂, or quartz in a proportion of 2.0 - 4.0% by weight.

3. A component according to claim 1, characterised in that the compound material contains Al₂O₃ in a proportion of 0.4 - 1% by weight.

4. A component according to claims 1 to 3, characterised in that the proportion of graphite in the compound material is 0.5 - 1.5% by weight.

5. A component according to claims 1 to 4, characterised in that the compound material is made of 84% by weight Cu, 13% by weight Sn, 2% by weight SiO₂ and 1% by weight graphite.

6. A component according to claims 1 to 5, characterised in that the compound material is made of 84% by weight Cu, 5% by weight Sn, 6% by weight Zn, 4% by weight SiO₂ and 1% by weight SiO₂ (sic).

7. A component according to claims 1 to 6, characterised in that it is a self-supporting synchronising ring with locking toothing and abutments.

8. A component according to claims 1 to 6, characterised in that it comprises a friction element, which is pressed, welded or sintered onto a base element.

9. A method for manufacturing a component for synchronising devices according to claims 1 to 8, characterised in that starting powders having the following particle sizes are used:
silicon dioxide and/or aluminium oxide powder: 65 - 100% by weight with a particle size < 40 µm and 0 - 35% by weight 40 - 100 µm, graphite and/or molybdenum sulphide powder: 50 - 100% by weight < 5 µm and 0 - 50% by weight 5 - 160 µm.

10. A method for manufacturing a component for synchronising devices according to claims 1 to 9, characterised in that the already sintered component is subsequently subjected to secondary surface compression and strain-hardening in the region of the friction surface by means of high-pressure particle radiation with particles of 400 - 500 µm particle size at a radiation pressure > 5 bar.

11. A method for manufacturing a component for synchronising devices according to claims 1 to 10, characterised in that the metallic material component zinc is added to the material starting mixture in the form of brass powder with a particle size < 150 µm.

12. The use of a component for synchronising devices according to claims 1 to 8 in a friction pairing with a component of high surface porosity made of steel.

## Revendications

1. Elément destiné à des dispositifs lubrifiés à l'huile pour la synchronisation par friction dans des boîtes de changement de vitesse de véhicules automobiles, par exemple une bague de synchronisation, à surfaces de friction en alliage de bronze,
caractérisé en ce que l'alliage de bronze est une matière composite frittée, qui présente une porosité habituelle de produit fritté mais qui est largement exempte de pores dans la zone de sa surface de friction, de la composition suivante:
1 à 6 % en poids d'oxyde de silicium et/ou d'aluminium,
facultativement 0,2 à 6 % en poids de graphite et/ou de disulfure de molybdène,
jusqu'à 6 % en poids de zinc,
jusqu'à 6 % en poids de nickel,
jusqu'à 3 % en poids de molybdène,
reliquat : bronze à 70 à 98 parties en poids de cuivre et 2 à 30 parties en poids de zinc,
les granulométries des poudres d'origine utilisées pour l'élaboration de l'alliage de bronze étant comprises entre 5 et 60 µm pour les composants métalliques,
au moins en majorité < 40µm pour l'oxyde de silicium et /ou l'oxyde d'aluminium;
et au moins pour moitié < 5 µm pour le graphite et/ou le disulfure de molybdène.

2. Elément selon la revendication 1, caractérisé en ce que la matière composite contient de la SiO₂, ou du quartz à une teneur de 2 à 4,0 % en poids.

3. Elément selon la revendication 1, caractérisé en ce que la matière composite contient du Al₂O₃ à une teneur de 0,4 à 1 % en poids.

4. Elément selon l'une des revendications 1 à 3, caractérisé en ce que la teneur en graphite dans la matière composite est de 0,5 à 1,5 % en poids.

5. Elément selon l'une des revendications 1 à 4, caractérisé en ce que la matière composite se compose de 84% en poids de Cu, 13 % en poids de Sn, 2 % en poids de SiO₂, et 1% en poids de graphite.

6. Elément selon l'une des revendications 1 à 5, caractérisé en ce que la matière composite se compose de 84% en poids de Cu, 5 % en poids de Sn, 6 % en poids de Zn, 4 % en poids de SiO₂, et 1% en poids de SiO₂.

7. Elément selon l'une des revendications 1 à 6, caractérisé en ce que l'élément est une bague de synchronisation autoporteuse à denture de blocage et butées.

8. Elément selon l'une des revendications 1 à 6, caractérisé en ce que l'élément comporte un corps de friction qui est appliqué par pression, soudé ou fritté sur un corps de base.

9. Procédé de fabrication d'un élément pour dispositifs de synchronisation selon l'une des revendications 1 à 8, caractérisé par l'utilisation de poudres d'origine dont les granulométries sont les suivantes:
poudres d'oxyde de silicium et /ou oxyde d'aluminium;
65 à 100 parties en poids de granulométrie < 40µm et
0 à 35 % parties en poids de 40 à 100 µm,
poudres de graphite et/ou de disulfure de molybdène
50 à 100 parties en poids < 5 µm et 0 à 50 parties en poids de 5 à 160 µm.

10. Procédé de fabrication d'un élément pour dispositifs de synchronisation selon l'une des revendications 1 à 9, caractérisé en ce que l'élément fritté fini est ensuite compacté, et stabilisé à froid, superficiellement dans la zone de la surface de friction par grenaillage de particules sous haute pression au moyen de particules d'une granulométrie de 400 à 500 µm pour une pression d'acier > 5 bar.

11. Procédé de fabrication d'un élément pour dispositifs de synchronisation selon l'une des revendications 1 à 10, caractérisé en ce que la fraction de matière métallique concernant le zinc est introduite dans le mélange d'origine des matières sous la forme d'une poudre de laiton d'une granulométrie < 150 µm.

12. Utilisation d'un élément pour dispositifs de synchronisation selon l'une des revendications 1 à 8 dans la combinaison par friction avec un élément à haute porosité superficielle en acier.
